# EUROPÄISCHE PATENTSCHRIFT

(11) **EP 3 114 082 B1**
(45) Veröffentlichungstag und Bekanntmachung des Hinweises auf die Patenterteilung: **10.07.2019**
(21) Anmeldenummer: 15703762.3
(22) Anmeldetag: 03.02.2015
(51) Int. Cl.: C01B 33/107, B01J 19/02, B01J 19/08, C01G 17/04

(54) **VERFAHREN ZUR HERSTELLUNG REINER OCTACHLORTRISILANE UND DECACHLORTETRASILANE**
METHOD FOR PRODUCING PURE OCTACHLOROTRISILANE AND DECACHLOROTETRASILANES
PROCÉDÉ DE PRODUCTION D'OCTACHLOROTRISILANES ET DE DÉCACHLOROTETRASILANES

(30) Priorität: 03.03.2014 DE 102014203810
(43) Veröffentlichungstag der Anmeldung: 11.01.2017
(73) Patentinhaber: Evonik Degussa GmbH, 45128 Essen (DE)
(72) Erfinder: MARINAS PÉREZ, Janaina, 79730 Murg (DE); RAULEDER, Hartwig, 79618 Rheinfelden (DE); LANG, Jürgen Erwin, 76229 Karlsruhe (DE); GÖTZ, Christian, 11148 Taipei (TW); UEHLENBRUCK, Goswin, 61440 Oberursel (DE)
(74) Vertreter: Evonik Patent Association
(86) Internationale Anmeldenummer: PCT/EP2015/052120
(87) Internationale Veröffentlichungsnummer: WO 2015/132028

(56) Entgegenhaltungen:
- DE-A1-102007 007 874
- US-A1- 2011 284 796

## Beschreibung

Die Erfindung betrifft ein Verfahren und eine Vorrichtung zur Herstellung von hoch- und höchstreinem Octachlortrisilan bzw. Decachlortetrasilan aus Chlorsilanen, indem monomeres Chlorsilan einem nichtthermischen Plasma ausgesetzt und die resultierende Phase vakuumdestilliert wird.

Aus dem Stand der Technik sind Verfahren zur Herstellung von Polychlorsilanen bekannt. So offenbart die DE 10 2006 034 061 eine Reaktion von Siliciumtetrachlorid mit Wasserstoff zur Herstellung von Polysilanen. Aufgrund der Umsetzung in Gegenwart von Wasserstoff sind die hergestellten Polysilane wasserstoffhaltig. Um die Anlage im kontinuierlichen Betrieb halten zu können, wird Tetrachlorsilan im Überschuss in Bezug zum Wasserstoff zugesetzt. Zudem hat die offenbarte Anlage einen komplexen Aufbau und erlaubt lediglich die Herstellung von Polysilangemischen. Ein erhöhtes Molekulargewicht der Polysilane kann nur durch Hintereinanderschalten mehrerer Reaktoren und Hochfrequenzerzeuger erreicht werden. Nach dem jeweiligen Durchlaufen der hintereinandergeschalteten Plasmareaktoren erhöht sich das Molekulargewicht der Polysilane nach jedem Plasmareaktor. Das offenbarte Verfahren beschränkt sich auf die Herstellung von unzersetzt in Gasphase überführbare Verbindungen.

EP 1 264 798 A1 offenbart ein Verfahren zur Aufarbeitung von Nebenprodukten enthaltend Hexachlordisilan bei der Herstellung von polykristallinem Silicium.

Auch die US 4,542,002 und WO 2009/143823 A2 offenbaren plasmachemische Verfahren zur Herstellung von Polychlorsilanen ausgehend von Siliciumtetrachlorid und Wasserstoff. Herstellungsbedingt werden Wasserstoff enthaltende Polychlorsilane erhalten. Gemäß der WO 2009/143823 A2 werden Mischungen von Wasserstoff enthaltenden hochmolekularen Polychlorsilane erhalten. Das in den Polychlorsilanen enthaltene Siliciumtetrachlorid muss vor einer Weiterverwendung aufwendig destillativ im Vakuum entfernt werden. Besonders nachteilig im Stand der Technik ist die Notwendigkeit der Herstellung der Polychlorsilane in Gegenwart von gasförmigem Wasserstoff. Hierdurch werden sehr hohe Sicherheitsmaßnahmen an die Materialien und die Sicherung der Anlage gestellt.

Die Offenlegungsschrift DE 102007007874 A1 schlägt ein Verfahren vor, trimere Siliciumverbindungen Si₃X₈ oder trimere Germaniumverbindungen Ge₃X₈ herzustellen, indem ein Gemisch aus Siliciumverbindungen Siₙ(R₁ ... R₂ₙ₊₂) oder ein Gemisch aus Germaniumverbindungen Geₙ(R₁ ... R₂ₙ₊₂) mit n = 1 oder 2 und R₁, ..., R₂ₙ₊₂ = H oder Cl, Br und/oder I einem nichtthermischen Plasma ausgesetzt und die resultierende Phase zumindet einmalig einer Vakuum-Rektifikation zu unterzogen wird.

In der Schrift US 2011/0284796 A1 ist die Herstellung von Polysilanen offenbart, indem halogeniertes Silan mit Silicium in einem Festbettreaktor bei hohen Temperaturen umgesetzt wird. Das erhaltene Gemisch aus Silanen wird anschließend filtriert.

Demnach ist es im Stand der Technik üblich, Umsetzungsreaktionen in Plasmen zu Erzeugung komplexer Gemische durchzuführen, in denen das eigentlich gewünschte Produkt zusammen mit zahlreichen Nebenprodukten auftritt, und/oder zusammen mit Nebenprodukten, die in ihrer Struktur dem Gewünschten sehr ähneln.

Aufgabe der vorliegenden Erfindung war es, trimere oder quartäre Chlorsilane bzw. trimere oder quartäre Chlorgermaniumverbindungen anwendungstechnisch nutzbar zu machen. Aufgabe der vorliegenden Erfindung ist es auch, ein wirtschaftliches Verfahren zur schonenden Gewinnung der trimeren oder quartären Chlorsilane bereitzustellen.

Überraschend wurde gefunden, dass ein Gemisch aus Siliciumverbindungen der allgemeinen Formel Siₙ(R₁ ... R₂ₙ₊₂), das beispielsweise Siliciumtetrachlorid aufweist, oder ein Gemisch aus Germaniumverbindungen der allgemeinen Formel Geₙ(R₁ ... R₂ₙ₊₂) mit n mindestens 2, und R₁ bis R₂ₙ₊₂ Wasserstoff und/oder X = Chlor, Brom und/oder Jod entsprechen, in einem nichtthermischen Plasma zu einem Gemisch aus Siliciumverbindungen der allgemeinen Formel Si₃X₈ oder Si₄X₁₀ oder Germaniumverbindungen der allgemeinen Formel Ge₃X₈ oder Ge₄X₁₀ sowie weiteren Polyverbindungen des Siliciums oder Germaniums umgesetzt werden.

Diese Polyverbindungen weisen mindestens zwei Silicium- bzw. Germaniumatome auf. Als solche kommen insbesondere Dodecachlorpentasilan und deren Strukturisomere bzw. Verbindungen des Germaniums in Betracht. Ebenfalls überraschend war, dass eine solche Herstellung im Wesentlichen ohne Gegenwart von Wasserstoffgas im nichtthermischen Plasma gelingt.

Weiterhin wurde überraschend gefunden, dass eine in einem nichtthermischen Plasma erhaltene trimere oder quartäre Silicium- oder Germaniumverbindung, die aufgrund der Vorgänge in einem Plasma üblicherweise zusammen mit zahlreichen anderen Verbindungen zu erwarten ist, nach zumindest einer Vakuum-Rektifikation der resultierenden Phase hochrein erhalten wird.

Gegenstand der Erfindung ist daher ein Verfahren zur Herstellung von trimeren und quartären Siliciumverbindungen der allgemeinen Formel Si₃X₈ und Si₄X₁₀
oder von trimeren und quartären Germaniumverbindungen der allgemeinen Formel Ge₃X₈ und Ge₄X₁₀,
a) wobei ein Gemisch aus Siliciumverbindungen der allgemeinen Formel

   Siₙ(R₁ ... R₂ₙ₊₂)

   oder ein Gemisch aus Germaniumverbindungen der allgemeinen Formel

   Geₙ(R₁ ... R₂ₙ₊₂)

   mit n ≥ 2, und R₁ bis R₂ₙ₊₂ Wasserstoff und/oder X
   und X = Halogen entsprechen, und
      das Halogen ausgewählt ist aus Chlor, Brom und/oder Jod, einem nichtthermischen Plasma ausgesetzt wird, und
b) die resultierende Phase zumindest einmalig einer Vakuum-Rektifikation und Filtration unterzogen wird,
wobei Siliciumverbindungen der allgemeinen Formel Si₃X₈ und Si₄X₁₀ oder Germaniumverbindungen der allgemeinen Formel Ge₃X₈ und Ge₄X₁₀ erhalten werden.

Im Rahmen der Erfindung wird der Ausdruck *"Siliciumverbindungen der allgemeinen Formel Si₃X₈ und Si₄X₁₀ oder Germaniumverbindungen der allgemeinen Formel Ge₃X₈ und Ge₄X₁₀"* mit *"Produkt"*, und das in Schritt a eingesetzte *Gemisch aus Siliciumverbindungen der allgemeinen Formel Siₙ(R₁...R*_{*2n*+}*₂) oder aus Germaniumverbindungen der allgemeinen Formel Geₙ(R₁...R₂ₙ*+*₂)* mit *"Edukt"* abgekürzt.

Der wirtschaftliche Vorteil des erfindungsgemäßen Verfahrens wird insbesondere durch die erfindungsgemäße Vorrichtung mit einem Gasentladungsreaktor, der zwischen zwei Kolonnen angeordnet ist, erzielt.
Das erhaltene Produkt ist vorzugsweise frei von Wasserstoff. Als frei von Wasserstoff gilt im Rahmen der Erfindung ein Gehalt an Wasserstoffatomen unter 1x10⁻³ Gew.-%, vorzugsweise unter 1x10⁻⁴ Gew.-%, weiter bevorzugt unter 1x10⁻⁶ Gew.-% bis hin zur Nachweisgrenze bei aktuell 1x10⁻¹⁰ Gew.-%.

Die bevorzugte Methode zur Bestimmung des Gehaltes an Wasserstoffatomen ist die ¹H-NMR-Spektroskopie. Zur Bestimmung des Gesamtverunreinigungsprofils mit weiter unten genannten Elementen wird ICP-MS eingesetzt.

Ein besonders großer Vorteil des erfindungsgemäßen Verfahrens ist die unmittelbare Verwendbarkeit des erhaltenen Produktes ohne weitere Aufreinigung zur Abscheidung von hochreinen Silicium bzw. Germanium Schichten mit Solar-Technologie geeigneter Qualität oder Halbleiterqualität.

Das erfindungsgemäß hergestellte Produkt kann zur Herstellung von Siliciumnitrid, Siliciumoxynitrid, Siliciumcarbid, Siliciumoxycarbid oder Siliciumoxid, oder Germaniumnitrid, Germaniumoxynitrid, Germaniumcarbid, Germaniumoxycarbid oder Germaniumoxid verwendet werden.

Das erfindungsgemäße Verfahren wird im Folgenden näher erläutert.

Im Schritt a des Verfahrens erfolgt die Umsetzung in einem nichtthermischen Plasma. Es kann vorteilhaft sein, einen Gasentladungsreaktor und eine stromabwärts angeordnete Kolonne einzusetzen.

Bevorzugt kann in dem erfindungsgemäßen Verfahren Edukt mit n ≥ 3 eingesetzt werden.

Vorzugsweise wird in dem erfindungsgemäßen Verfahren Edukt eingesetzt, das eine Gesamtverunreinigung mit nachstehend genannten Elementen von kleiner gleich 100 Gew.-ppm bis 0,001 Gew.-ppt aufweist. Eine Gesamtverunreinigung mit den nachstehenden Elementen kleiner gleich 50 Gew.-ppm bis 0,001 Gew.-ppt definiert ein höchstreines Edukt, wobei kleiner gleich 40 Gew.-ppm bis 0,001 Gew.-ppt an Gesamtverunreinigung bevorzugt sind. Weiterhin vorzugsweise beträgt der Gehalt an Gesamtverunreinigungen kleiner gleich 100 Gew.-ppm bis 0,001 Gew.-ppt, besonders bevorzugt kleiner gleich 50 Gew.-ppm bis 0,001 Gew.-ppt, wobei das Verunreinigungsprofil des Eduktes wie folgt ist:
a. Aluminium von 15 Gew.-ppm bis 0,0001 Gew.-ppt, und/oder
b. Bor kleiner gleich 5 bis 0,0001 Gew.-ppt,
   bevorzugt im Bereich von 3 Gew.-ppm bis 0,0001 Gew.-ppt, und/oder
c. Calcium kleiner gleich 2 Gew.-ppm, bevorzugt von 2 Gew.-ppm bis 0,0001 Gew.-ppt, und/oder
d. Eisen von 5 Gew.-ppm bis 0,0001 Gew.-ppt,
   vorzugsweise von 0,6 Gew.-ppm bis 0,0001 Gew.-ppt, und/oder
e. Nickel von 5 Gew.-ppm bis 0,0001 Gew.-ppt,
   vorzugsweise von 0,5 Gew.-ppm bis 0,0001 Gew.-ppt, und/oder
f. Phosphor von 5 Gew.-ppm bis 0,0001 Gew.-ppt,
   vorzugsweise von 3 Gew.-ppm bis 0,0001 Gew.-ppt, und/oder
g. Titan kleiner gleich 10 Gew.-ppm,
   kleiner gleich 2 Gew.-ppm,
   bevorzugt von 1 Gew.-ppm bis 0,0001 Gew.-ppt,
   weiter bevorzugt von 0,6 Gew.-ppm bis 0,0001 Gew.-ppt,
   weiter bevorzugt von 0,1 Gew.-ppm bis 0,0001 Gew.-ppt, und/oder
h. Zink kleiner gleich 3 Gew.-ppm,
   bevorzugt von 1 Gew.-ppm bis 0,0001 Gew.-ppt,
   weiter bevorzugt von 0,3 Gew.-ppm bis 0,0001 Gew.-ppt, und/oder
i. Kohlenstoff,
   wobei die Konzentration von Kohlenstoff in einer im Rahmen des dem Fachmann bekannten Meßverfahrens üblichen Nachweisgrenze angestrebt wird.

Die Bestimmung der Gesamtverunreinigung mit den vorgenannten Elementen erfolgt vorzugsweise mittels ICP-MS. Insgesamt kann der Prozess kontinuierlich mittels online-Analytik überwacht werden. Die geforderte Reinheit kann mittels GC, IR, NMR, ICP-MS oder durch Widerstandsmessung bzw. GD-MS nach Abscheidung des Si überprüft werden.

Ebenso ist es von Vorteil, dass auf den Zusatz von teuren, inerten Edelgasen verzichtet werden kann. Alternativ kann ein Schleppgas, vorzugsweise ein unter Druck stehendes Inertgas, wie Stickstoff, Argon, ein anderes Edelgas oder Mischungen dieser zugesetzt werden.

Ein weiterer Vorteil des Verfahrens ist die selektive Herstellung von höchstreinem Octachlortrisilan, das ggf. einen geringen Gehalt an höchstreinem Hexachlordisilan, höchstreinem Decachlortetrasilanen und/oder Dodecachlorpentasilan aufweist und hervorragend den Anforderungen der Halbleiterindustrie entspricht.

In dem erfindungsgemäßen Verfahren kann das Produkt in einer Reinheit im ppb Bereich erhalten werden.

Verfahrensgemäß kann neben Octachlortrisilan und Decachlortetrasilan zusätzlich Hexachlordisilan, Dodecachlorpentasilan oder ein Gemisch umfassend mindestens zwei der genannten Polychlorsilane erhalten werden.

In dem erfindungsgemäßen Verfahren kann *"hochreines"* bzw. *"höchstreines"* Produkt erhalten werden, das wie folgt definiert ist.

Das hochreine Produkt weist einen Gehalt an Gesamtverunreinigung bei kleiner gleich 100 Gew.-ppm auf, und das höchstreine Produkt kleiner gleich 50 Gew.-ppm an Gesamtverunreinigung.

Die Gesamtverunreinigung ist die Summe der Verunreinigungen mit einem, mehreren oder allen Elementen ausgewählt aus Bor, Phosphor, Kohlenstoff und Fremdmetallen sowie Wasserstoff, vorzugsweise ausgewählt aus Bor, Phosphor, Kohlenstoff, Aluminium, Calcium, Eisen, Nickel, Titan und Zink und/oder Wasserstoff.

Das Profil dieser Verunreinigen des höchstreinen Produktes ist wie folgt:
a. Aluminium kleiner gleich 5 Gew.-ppm oder
   von 5 Gew.-ppm bis 0,0001 Gew.-ppt,
   vorzugsweise von 3 Gew.-ppm bis 0,0001 Gew.-ppt, und/oder
b. Bor von 10 Gew.-ppm bis 0,0001 Gew.-ppt,
   vorzugsweise im Bereich von 5 bis 0,0001 Gew.-ppt,
   weiter bevorzugt im Bereich von 3 Gew.-ppm bis 0,0001 Gew.-ppt, und/oder
c. Calcium kleiner gleich 2 Gew.-ppm,
   bevorzugt von 2 Gew.-ppm bis 0,0001 Gew.-ppt, und/oder
d. Eisen kleiner gleich 20 Gew.-ppm,
   bevorzugt von 10 Gew.-ppm bis 0,0001 Gew.-ppt,
   weiter bevorzugt von 0,6 Gew.-ppm bis 0,0001 Gew.-ppt, und/oder
e. Nickel kleiner gleich 10 Gew.-ppm,
   bevorzugt von 5 Gew.-ppm bis 0,0001 Gew.-ppt,
   weiter bevorzugt von 0,5 Gew.-ppm bis 0,0001 Gew.-ppt, und/oder
f. Phosphor kleiner 10 Gew.-ppm bis 0,0001 Gew.-ppt,
   bevorzugt von 5 Gew.-ppm bis 0,0001 Gew.-ppt,
   weiter bevorzugt von 3 Gew.-ppm bis 0,0001 Gew.-ppt, und/oder
g. Titan kleiner gleich 10 Gew.-ppm,
   kleiner gleich 2 Gew.-ppm,
   bevorzugt von 1 Gew.-ppm bis 0,0001 Gew.-ppt,
   weiter bevorzugt von 0,6 Gew.-ppm bis 0,0001 Gew.-ppt,
   weiter bevorzugt von 0,1 Gew.-ppm bis 0,0001 Gew.-ppt, und/oder
h. Zink kleiner gleich 3 Gew.-ppm,
   bevorzugt von 1 Gew.-ppm bis 0,0001 Gew.-ppt,
   weiter bevorzugt von 0,3 Gew.-ppm bis 0,0001 Gew.-ppt,
i. Kohlenstoff, und
j. Wasserstoff,
   wobei der Gehalt Wasserstoff und Kohlenstoff jeweils in einer Konzentration im Bereich der Nachweisgrenze der dem Fachmann bekannten Messverfahren angestrebt wird.

Die Gesamtverunreinigung des Produktes mit den vorgenannten Elementen bzw. Verunreinigungen liegt im Bereich von 100 Gew.-ppm bis 0,001 Gew.-ppt in hochreinem Produkt und bevorzugt von 50 Gew.-ppm bis 0,001 Gew.-ppt in höchstreinem Produkt in der Summe. Das erfindungsgemäß erhaltene Produkt weist eine Konzentration von Wasserstoff im Bereich der Nachweisgrenze der dem Fachmann bekannten Messverfahren auf.

In dem Verfahren kann ein Gasentladungsreaktor mit zwei Kolonnen zur Erzeugung eines nichtthermischen Plasmas eingesetzt werden. Verfahrensgemäß wird als nichtthermisches Plasma ein elektrisch erzeugtes Plasma bevorzugt. Dieses wird in einem Plasma-Reaktor erzeugt, in dem eine plasmaelektrische Stoffumwandlung induziert wird und basiert auf anisothermen Plasmen. Für diese Plasmen ist eine hohe Elektronentemperatur Tₑ ≥ 10⁴ K und relativ niedrige Gastemperatur T_{G} ≤ 10³ K charakteristisch. Die für die chemischen Prozesse notwendige Aktivierungsenergie erfolgt überwiegend über Elektronenstöße (plasmaelektrische Stoffumwandlung). Typische nichtthermische Plasmen können beispielsweise durch Glimmentladung, HF-Entladung, Hohlkathodenentladung oder Koronarentladung erzeugt werden. Der Arbeitsdruck, bei dem die erfindungsgemäße Plasmabehandlung durchgeführt wird liegt bevorzugt bei 1 bis 1000 mbar_{abs}, besonders bevorzugt bei 100 bis 500 mbar_{abs}, insbesondere bei 200 bis 500 mbar_{abs}, wobei die zu behandelnde Phase vorzugsweise auf eine Temperatur von -40 °C bis 200 °C, besonders bevorzugt auf 20 bis 80 °C, ganz besonders bevorzugt auf 30 bis 70 °C eingestellt ist. Bei Germaniumverbindungen kann die entsprechende Temperatur davon abweichen - als auch darüber oder darunter liegen.
Für die Definition des nichtthermischen Plasmas wird auf die einschlägige Fachliteratur verwiesen, wie beispielsweise auf *"*Plasmatechnik: Grundlagen und Anwendungen - Eine Einführung; Autorenkollektiv", Carl Hanser Verlag, München/Wien; 1984, ISBN 3-446-13627-4*.*

Das Paschen-Gesetz besagt, dass die Zündspannung für die Plasmaentladung im Wesentlichen eine Funktion des Produktes, p·d, aus dem Druck des Gases, p, und dem Elektrodenabstand, d, ist. Für das erfindungsgemäße Verfahren liegt dieses Produkt im Bereich von 0,001 bis 300 mm·bar, vorzugsweise von 0,01 bis 100 mm·bar, besonders bevorzugt bei 0,05 bis 10 mm·bar, insbesondere bei 0,07 bis 2 mm·bar. Die Entladung kann mittels verschiedenartiger Wechselspannungen und/oder gepulster Spannungen von 1 bis 1000 kV angeregt werden. Die Höhe der Spannung hängt in dem Fachmann bekannter Weise neben dem p·d-Wert der Entladungsanordung auch vom Prozessgas selbst ab. Besonders geeignet sind solche gepulste Spannungen, die hohe Flankensteilheiten und eine gleichzeitige Ausbildung der Entladung im gesamten Entladungsraum des Reaktors ermöglichen.

Der zeitliche Verlauf der Wechselspannung und/oder der eingekoppelten elektromagnetischen Impulse kann rechteckig, trapezförmig, gepulst oder stückweise aus einzelnen zeitlichen Verläufen zusammengesetzt sein. Wechselspannung und eingekoppelte elektromagnetischen Impulse können in jede dieser Formen des zeitlichen Verlaufs kombiniert sein.

Die Frequenz f der Wechselspannung kann beim erfindungsgemäßen Verfahren in einem Bereich von 1 Hz bis 100 GHz, bevorzugt von 1 Hz bis 100 MHz liegen. Die Repetierrate g des dieser Grundfrequenz überlagerten elektromagnetischen Impulse kann in einem Bereich von 0,1 kHz bis 50 MHz, bevorzugt von 50 kHz bis 50 MHz gewählt sein. Die Amplitude dieser Impulse kann von 1 bis 15 kVₚₚ (kV peak to peak), bevorzugt von 1 bis 10 kVₚₚ, besonders bevorzugt von 1 bis 8 kVₚₚ gewählt sein.

Diese Impulse können alle dem Fachmann bekannten Formen aufweisen, z. B. Sinus, Rechteck, Dreieck, oder eine Kombination daraus. Besonders bevorzugte Formen sind Rechteck oder Dreieck.

Dies steigert bereits die auf die Zeit bezogene Ausbeute an hochreinem oder höchstreinem Produkt erheblich gegenüber dem Verfahren des Standes der Technik ohne eingekoppeltem elektromagnetischen Impuls und einem sinusförmigen Verlauf der das Plasma erzeugenden Wechselspannung.

Eine weitere Steigerung der Ausbeute kann erzielt werden, wenn in dem erfindungsgemäßen Verfahren dem in das Plasma eingekoppelten elektromagnetischen Impuls zumindest ein weiterer elektromagnetischer Impuls mit der gleichen Repetierrate überlagert wird, *oder* die beiden oder zumindest zwei Impulse in einem Tastverhältnis von 1 bis 1000 zueinander stehen. Bevorzugt werden beide Impulse mit rechteckiger Form gewählt, jeweils mit einem Tastverhältnis von 10 und möglichst großer Flankensteilheit. Je größer die Flankensteilheit, desto höher die Ausbeute. Die Amplitude dieser Impulse kann von 1 bis 15 kVₚₚ, bevorzugt von 1 bis 10 kVₚₚ gewählt sein.

Die Ausbeute steigt mit der Repetierrate. Beispielsweise kann bei Repetierraten mit der mehrfachen Grundfrequenz, zum Beispiel der 10-fachen Grundfrequenz, ein Sättigungseffekt gefunden werden, in dem keine weitere Steigerung der Ausbeute mehr anfällt. Dieser Sättigungseffekt kann von der Gaszusammensetzung, dem p·d-Wert der Versuchsanordnung, aber auch von der elektrischen Anpassung des Plasmareaktors an das elektronische Vorschaltgerät abhängen.

In dem erfindungsgemäßen Verfahren kann der oder die elektromagnetischen Impulse durch ein Impulsvorschaltgerät mit Strom- oder Spannungseinprägung eingekoppelt werden. Wird der Impuls stromeingeprägt, erhält man eine größere Flankensteilheit.

In einer weiteren Ausprägung des erfindungsgemäßen Verfahrens kann der Impuls in dem Fachmann bekannter weise anstelle periodisch synchron auch transient asynchron eingekoppelt werden.

Die nach Schritt a des erfindungsgemäßen Verfahrens erhaltene resultierende Phase wird im Schritt b zumindest einmalig, vorzugsweise einmalig, einer Vakuum-Rektifikation und Filtration unterzogen.

Vorzugsweise kann im Schritt b eine Vakuumfeindestillation durchgeführt werden, das die höhermolekularen Polychlorsilane oder Germaniumverbindungen abtrennt. Alternativ oder zusätzlich kann sich auch eine chromatographische Aufarbeitung anschließen, um Verunreinigungen abzutrennen oder auch, um den Gehalt an Siliciumverbindungen der allgemeinen Formel Si₃X₈ und Si₄X₁₀ oder Germaniumverbindungen der allgemeinen Formel Ge₃X₈ und Ge₄X₁₀ einzustellen.

Es kann weiterhin vorteilhaft sein, die Verfahrensschritte a und/oder b kontinuierlich durchzuführen.

Gegenstand der Erfindung ist ebenfalls eine Vorrichtung zur kontinuierlichen Durchführung des erfindungsgemäßen Verfahrens, welche dadurch gekennzeichnet ist, dass sie einen Reaktor zur Erzeugung des nichtthermischen Plasmas, und mindestens eine Vakuum-Rektifikationskolonne, und zumindest eine Filtrationsvorrichtung, und/oder Adsorptionsvorrichtung aufweist.

Die erfindungsgemäße Vorrichtung kann als Reaktor einen Ozonisator aufweisen. Vorzugsweise kann der Reaktor mit Glasrohren, insbesondere mit Quarzglasrohren ausgestattet sein. Die Glasrohre der Vorrichtung kann durch Spacer aus inertem Material beabstandet sein. Solche Spacer können vorteilhaft aus Glas oder Teflon sein.

Das erfindungsgemäß erhaltene Produkt kann zur Herstellung von Schichten aus Siliciumnitrid, Siliciumoxynitrid, Siliciumcarbid, Siliciumoxycarbid oder Siliciumoxid, oder Schichten aus Germaniumnitrid, Germaniumoxynitrid, Germaniumcarbid, Germaniumoxycarbid oder Germaniumoxid verwendet werden.

Das erfindungsgemäße Verfahren wird im Folgenden anhand von Beispielen näher erläutert.

### Beispiel 1 (Gewinnung von Octachlortrisilan)

In einer Rektifikations-Anlage wurde unter Stickstoff Atmosphäre als Schutzgas 1212 g Silangemisch, das Tri- und Oligosilane enthielt, in der Rektifikationsblase vorgelegt. Danach wurde die Apparatur bis auf 8 mbar evakuiert und bis 157 °C aufgeheizt. 269 g Octachlortrisilan wurden gewonnen.

Das als Ergebnis der Kolonnendestillation gewonnene Octachlortrisilan wurde über eine 0,45 µm Polypropylen Filter unter Schutzgas filtriert und so auf schonende Weise hoch reines Octachlortrisilan erhalten.

### Beispiel 2 (Gewinnung von Octachlortrisilan)

In einer Rektifikations-Anlage wurde unter Schutzgasbedingungen (Stickstoff Atmosphäre) 300 kg Silangemisch, enthaltend Tri- und Oligosilane, in der Rektifikationsblase vorgelegt.

Die Rektifikationseinheit, verpackt mit einem Edelstahl Destillationspackung, wie zwischen 80 und 120 theoretische Trennstufen auf.
Die Apparatur wurde bis auf 9,3 mbar evakuiert und bis 170 °C aufgeheizt. 121,6 kg Octachlortrisilan mit einer gaschromatographisch gemessenen Reinheit von über 95 % wurden gewonnen.

Das als Ergebnis der Kolonnendestillation gewonnene Octachlortrisilan wurde anschließend über eine 0,45 µm Polypropylen Filter unter Schutzgas filtriert. Auf diese Weise wurde hoch reines Octachlortrisilan erhalten.

### Beispiel 3 (Gewinnung von Decachlortetrasilan)

In einer Rektifikations-Anlage wurde unter Stickstoff Atmosphäre als Schutzgas 468 g Silangemisch, enthaltend Oligosilane, in der Rektifikationsblase vorgelegt. Danach wurde die Apparatur auf 2 mbar evakuiert und bis 157 °C aufgeheizt. 160 g Decachlortetrasilan wurden gewonnen.

Das als Ergebnis der Kolonnendestillation gewonnene Decachlortetrasilan wurde über eine 0,45 µm Polypropylen Filter unter Schutzgas filtriert und so auf schonende Weise hoch reines Decachlortetrasilan erhalten.

### Beispiel 4 (Gewinnung von Decachlortetrasilan)

In einer Rektifikations-Anlage wurde unter Schutzgasbedingungen (Stickstoff Atmosphäre) 300 kg Silangemisch, enthalten Tri- und Oligosilane, in der Rektifikationsblase vorgelegt.

Die Rektifikationseinheit, verpackt mit einem Edelstahl Destillationspackung, wies zwischen 80 und 120 theoretische Trennstufen auf.

Nach der Trennung der Octachlortrisilan, wie im Beispiel 2 beschrieben, wurde die Apparatur auf 3,33 mbar evakuiert und auf 184 °C aufgeheizt. Es wurden 39,6 kg Decachlortetrasilan mit einer gaschromatographisch ermittelten Reinheit von über 95% gewonnen.

Das als Ergebnis der Kolonnendestillation gewonnene Decachlortetrasilan wurde über ein 0,45 µm Polypropylen Filter unter Schutzgas filtriert und so auf schonende Weise hoch reines Decachlortetrasilan erhalten.

## Patentansprüche

1. Verfahren zur Herstellung von trimeren und quartären Siliciumverbindungen der allgemeinen Formel Si₃X₈ und Si₄X₁₀
oder von trimeren und quartären Germaniumverbindungen der allgemeinen Formel Ge₃X₈ und Ge₄X₁₀
a) wobei ein Gemisch aus Siliciumverbindungen der allgemeinen Formel
Siₙ(R₁ ... R₂ₙ₊₂)
oder ein Gemisch aus Germaniumverbindungen der allgemeinen Formel
Geₙ(R₁ ... R₂ₙ₊₂)
mit n ≥ 3, und R₁ bis R₂ₙ₊₂ Wasserstoff und/oder X
und X = Halogen entsprechen, und
das Halogen ausgewählt ist aus Chlor, Brom und/oder Jod, einem nichtthermischen Plasma ausgesetzt wird, und
b) die resultierende Phase zumindest einmalig einer Vakuum-Rektifikation und Filtration unterzogen wird, wobei
Siliciumverbindungen der allgemeinen Formel Si₃X₈ und Si₄X₁₀ oder Germaniumverbindungen der allgemeinen Formel Ge₃X₈ und Ge₄X₁₀ erhalten werden.

2. Verfahren nach einem der vorhergehenden Ansprüche, wobei im Anschluss an den Schritt b oder vor dem Schritt b die resultierende Phase einer Adsorption unterzogen wird.

3. Verfahren nach einem der vorhergehenden Ansprüche,
**dadurch gekennzeichnet,**
**dass** die Verfahrensschritte a) und/oder b) kontinuierlich erfolgen.

4. Verfahren nach einem der vorhergehenden Ansprüche,
**dadurch gekennzeichnet,**
**dass** die nichtthermische Plasmabehandlung im Verfahrensschritt a) bei Drücken von 1 bis 1000 mbar_{abs} erfolgt.

## Claims

1. Process for the preparation of trimeric and quaternary silicon compounds of the general formula Si₃X₈ and Si₄X₁₀
or of trimeric and quaternary germanium compounds of the general formula Ge₃X₈ and Ge₄X₁₀
a) where a mixture of silicon compounds of the general formula
Siₙ(R₁ ... R₂ₙ₊₂)
or a mixture of germanium compounds of the general formula
Geₙ(R₁ ... R₂ₙ₊₂)
with n ≥ 3, and R₁ to R₂ₙ₊₂ is hydrogen and/or X
and X = halogen, and
the halogen is selected from chlorine, bromine and/or iodine,
is exposed to a nonthermal plasma, and
b) the resulting phase is subjected at least once to a vacuum rectification and filtration, where silicon compounds of the general formula Si₃X₈ and Si₄X₁₀
or germanium compounds of the general formula Ge₃X₈ and Ge₄X₁₀
are obtained.

2. Process according to any of the preceding claims, where, after step b or before step b, the resulting phase is subjected to an adsorption.

3. Process according to any of the preceding claims,
**characterized in that**
the process steps a) and/or b) take place continuously.

4. Process according to any of the preceding claims,
**characterized in that**
the nonthermal plasma treatment in process step a) takes place at pressures from 1 to 1000 mbar_{abs}.

## Revendications

1. Procédé pour la préparation de composés de silicium trimères et quaternaires de formule générale Si₃X₈ et Si₄X₁₀
ou de composés de germanium trimères et quaternaires de formule générale Ge₃X₈ et Ge₄X₁₀
a) dans lequel on expose à un plasma non thermique un mélange de composés de silicium de formule générale Siₙ(R₁ ... R₂ₙ₊₂)
ou un mélange de composés de germanium de formule générale Geₙ(R₁ ... R₂ₙ₊₂)
où n ≥ 3, et R₁ à R₂ₙ₊₂ représentent un atome d'hydrogène et/ou X
et X = halogène, et
l'halogène est choisi parmi le chlore, le brome et/ou l'iode, et
b) on soumet la phase résultante au moins une fois à une rectification sous vide et une filtration, de sorte qu'on obtient
des composés de silicium de formule générale Si₃X₈ et Si₄X₁₀
ou des composés de germanium de formule générale Ge₃X₈ et Ge₄X₁₀.

2. Procédé selon l'une quelconque des revendications précédentes, dans lequel à la suite de l'étape b ou avant l'étape b on soumet la phase résultante à une adsorption.

3. Procédé selon l'une quelconque des revendications précédentes,
**caractérisé en ce que**
les étapes a) et/ou b) du procédé s'effectuent en continu.

4. Procédé selon l'une quelconque des revendications précédentes,
**caractérisé en ce que**
le traitement par plasma non thermique dans l'étape a) du procédé s'effectue sous des pressions de 1 à 1 000 mbars_{abs}.
